# EUROPEAN PATENT SPECIFICATION

(11) **EP 3 302 082 B1**
(45) Date of publication and mention of the grant of the patent: **25.03.2020**
(21) Application number: 16727381.2
(22) Date of filing: 27.05.2016
(51) Int. Cl.: A23D 7/005, A23G 1/30, A23G 1/46, A23G 1/50, A23G 3/34, A23G 3/40, A23G 3/46, A23G 3/50

(54) **USE OF STABLE WATER-IN-OIL EMULSIONS FOR CONFECTIONERIES**
VERWENDUNG VON STABILE WASSER-IN-ÖL-EMULSIONEN FÜR SÜSSWAREN
UTILISATION D'ÉMULSIONS EAU-DANS-HUILE POUR CONFISERIE

(30) Priority: 02.06.2015 EP 15170261
(43) Date of publication of application: 11.04.2018
(73) Proprietor: Société des Produits Nestlé S.A., 1800 Vevey (CH)
(72) Inventor: CELIGUETA TORRES, Isabel, York Yorkshire YO10 3UP (GB)
(74) Representative: Lumsden, Stuart Edward Henry
(86) International application number: PCT/EP2016/061961
(87) International publication number: WO 2016/193132

(56) References cited:
- EP-A2- 0 427 544
- JP-A- 2010 011 800
- US-A- 5 244 675
- RAIKOS ET AL: "Effect of heat treatment on milk protein functionality at emulsion interfaces. A review", FOOD HYDROCOLLOIDS, ELSEVIER BV, NL, vol. 24, no. 4, June 2010 (2010-06), pages 259-265, XP026879447, ISSN: 0268-005X [retrieved on 2009-10-29]
- Anonymous: "Chocolate Butter Recipe - Food.com - 299248", , 15 April 2012 (2012-04-15), XP055221752, Retrieved from the Internet: URL:https://web.archive.org/web/2012041505 3732/http://www.food.com/recipe/chocolate- butter-299248 [retrieved on 2015-10-19]
- KUNIO YAMAUCHI ET AL: "EMULSIFYING PROPERTIES OF WHEY PROTEIN", JOURNAL OF FOOD SCIENCE, WILEY-BLACKWELL PUBLISHING, INC, US, vol. 45, 1980, pages 1237-1242, XP001347128, ISSN: 0022-1147
- MICHEL BRITTEN ET AL: "Emulsifying Properties of Whey Protein and Casein Composite Blends", JOURNAL OF DAIRY SCIENCE., vol. 74, no. 10, October 1991 (1991-10), pages 3318-3325, XP055222305, US ISSN: 0022-0302, DOI: 10.3168/jds.S0022-0302(91)78519-6
- SOUCI ET AL: "food composition and nutrition tables, Dairy products", 1 January 2000 (2000-01-01), FOOD COMPOSITION AND NUTRITION TABLES = DIE ZUSAMMENSETZUNG DER LEBENSMITTEL, NÄHRWERT-TABELLEN = LA COMPOSITION DES ALIMENTS, TABLEAUX DES VALEURS NUTRITIVES, MEDPHARM SCIENTIFIC PUBLISHERS, STUTTGART, GERMANY, PAGE(S) 1 - 71, XP002488783, ISBN: 978-3-88763-076-8 * page 37 - page 40 * * page 43 - page 44 *
- ANUP SHARMA ET AL: "Functionality of milk powders and milk-based powders for end use applications-a review", COMPREHENSIVE REVIEWS IN FOOD SCIENCE AND FOOD SA, INSTITUTE OF FOOD TECHNOLOGISTS, CHICAGO, IL, US, vol. 11, no. 5, 1 September 2012 (2012-09-01), pages 518-528, XP009163546, ISSN: 1541-4337, DOI: 10.1111/J.1541-4337.2012.00199.X [retrieved on 2012-08-24]

## Description

### Field of the invention

The present invention relates to the field of emulsions, particularly to the stabilisation of confectionery water-in-oil emulsions by the use of milk proteins.

### Background of the invention

Confectionery products such as chocolates, pralines or the like are fat-based products which are well appreciated by consumers; there is a growing proportion of consumers who try to limit their intake of fat and/or calories and many efforts have been made by the Confectionery industry to lower the fat and calorie content of confectionery products. One of the potential approaches to achieve such goal is via the use of emulsions which might allow incorporation of water in traditional confectionery products, thus decreasing their fat/calorie content.

Emulsions are widely used in food technology, for instance as means to improve the nutritional profile of food products by enabling fat content reduction, and/or the incorporation of water soluble nutrients and flavourings. Emulsions are normally obtained with the aid of different molecular emulsifying agents like emulsifiers, proteins or amphiphilic polymers (also called stabilizers). These ingredients are indispensable to the manufacture of stable commercially acceptable emulsion based products. Efficient stabiliser and emulsifier systems already exist, but these are often based on chemically modified ingredients. Emulsifiers and stabilizers are generally considered as additives which under many countries' health regulations must be declared in the product label by their respective E-numbers and some are considered "synthetic" ingredients, i.e. obtained by chemical processing. There is a growing demand from consumers for products which are free from artificial additives or so-called "E numbers".

Thus there is a need for replacing synthetic or artificial emulsifiers with natural emulsifier systems that can provide the necessary tensioactive properties whilst not compromising on the product quality.

Natural ingredients with emulsifying properties are known, but they are usually not as efficient as synthetic emulsifiers and/or present other drawbacks.

For example, egg yolk has been known for a long time for its emulsifying properties. EP 2185003 describes a stabiliser system for frozen confectioneries comprising egg yolk as natural emulsifier associated with starch and citrus fibers. However, the use of egg yolk is considerably limited due to the stringent processing conditions required for sanitary reasons, and the storage conditions for required for non-cooked products. Also for many food products it is not desired to have egg yolk as an ingredient. Also the use of egg yolk is limited in some cases due to its allergen character.

Where a confectionery product consisting of or comprising a fat/water emulsion is to be provided, an additional problem is to be faced. As confectionery products naturally contain sugar or other hydrophilic sweeteners, the incorporation of water into such products always presents some challenges linked in particular to the fact that the water added would immediately interact with the hydrophilic sweetener by determining an increase of viscosity in the confectionery mass which would render it not processable.

WO2013068425 (of the same applicant) discloses the use of cocoa particles as emulsifier system for the stabilization of a water-in oil or oil-in water emulsions.

EP0427544 discloses a chocolate containing water. JP2010011800 discloses a margarine stabilized with whey-protein. Anup Sharma et al, Comprehensive Reviews in Food Science and Food SA, Institute of Food Technologists, Vol. 11, No. 5, 2012 discloses using milk proteins as emulsifiers.

Anyway, there remains a need to identify alternative natural emulsifier systems suitable for the preparation of confectionery products, particularly for confectionery products at reduced fat and/or calorie content. Additionally, there exists a need to identify natural emulsifier systems which could be used for confectionery products which don't or can't contain cocoa particles for reason linked to their nature (for example white chocolate) or desired sensory properties.

It is an object of the present invention to provide a natural emulsifier system which can replace synthetic emulsifiers in confectionery applications, while not compromising on the product quality and which could be used also in recipes which do not allow the presence of cocoa particles.

It is a further object of the present invention that of providing a natural emulsifier system which allows the preparation of confectionery water-in-oil-emulsions and products consisting of or comprising such confectionery water-in-oil-emulsions, without incurring in the typical manufacturing challenges of water incorporation into fat based masses comprising sugar or other hydrophilic sweetener, such as, for example, viscosity increase during processing.

### Summary of the invention

It has surprisingly been found by the inventors that milk proteins sourced from milk products can be used to replace conventional emulsifiers to effectively stabilise confectionery water-in-oil emulsions. The invention is defined by claim 1.

Accordingly in one aspect the present invention encompasses the use of milk proteins as the emulsifier system for the stabilization of confectionery water-in-oil emulsions.

Advantageously the confectionery water-in-oil emulsion of the present invention is free from synthetic or artificial emulsifiers.

Advantageously, the milk protein stabilized confectionery water-in oil emulsions of the invention do not require the addition of any other emulsifier.

The milk protein stabilized confectionery water-in oil emulsions for use according to the present invention is incorporated into or constitute a confectionery product.

The confectionery water-in oil emulsion for use in the present invention may be prepared by a process comprising the steps of:
a) mixing a fat phase and a natural emulsifier system comprising a milk protein ingredient;
b) optionally heating the mixture of step a) at a temperature comprised between 70 and 110 deg C for a time comprised between 10 seconds and 30 minutes;
c) Adding a water phase comprising sugar to the fat phase obtained in step a) under mixing to form a water-in-oil emulsion.

The confectionery water-in oil emulsion for use in the present invention may be prepared by a process comprising the steps of:
a) mixing a fat phase and a natural emulsifier system comprising a milk protein ingredient;
b) optionally heating the mixture of step a) at a temperature comprised between 70 and 110 deg C for a time comprised between 10 seconds and 30 minutes;
c) adding a water phase comprising sugar to the fat phase obtained in step a) under mixing to form a water-in-oil emulsion;
d) optionally, Mixing the emulsion obtained in step c) with a fat-based confectionery mass.

Advantageously the present invention makes possible the preparation of confectionery products, which do not contain any additives, or non-natural ingredients. The milk-protein stabilised confectionery water-in-oil emulsions used in the present invention do not require the addition of any additional emulsifiers. Advantageously the milk protein emulsifier system used in the present invention can replace synthetic emulsifiers in particular in the manufacture of confectionery products.

Advantageously the milk protein emulsifier system used in the present invention can replace synthetic emulsifiers in particular in the manufacture of confectionery products without incurring in the typical manufacturing challenges of water incorporation into fat based masses comprising sugars or other hydrophilic sweeteners.

### Brief description of the drawings

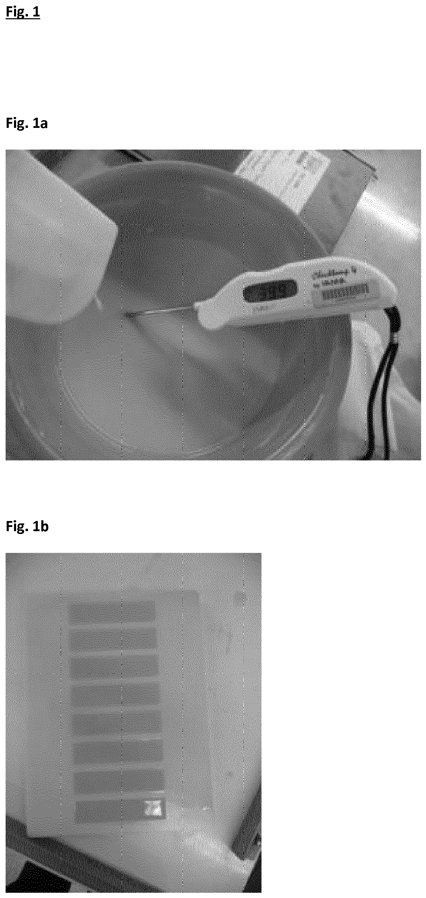

**Fig. 1** - **Fig 1a** represents a picture of a confectionery product comprising a confectionery water-in-oil emulsion according to the invention as obtained after step 2) of the process described in Example 1 and shows no increase of viscosity for the mass which can be afterwards easily moulded **(****Fig 1b****).**

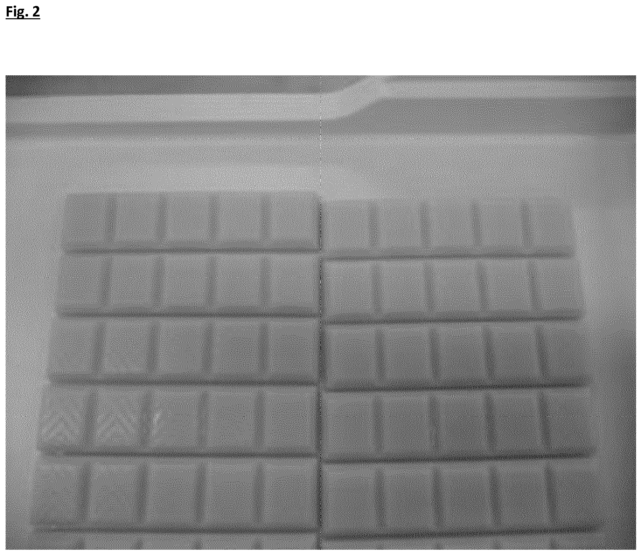

**Fig. 2** represents a picture of a confectionery product comprising a confectionery water-in-oil emulsion according to the invention as obtained after de-moulding step in Example 1 (Step 3). As it may be observed, the products could be easily de-moulded without damages for the bars.

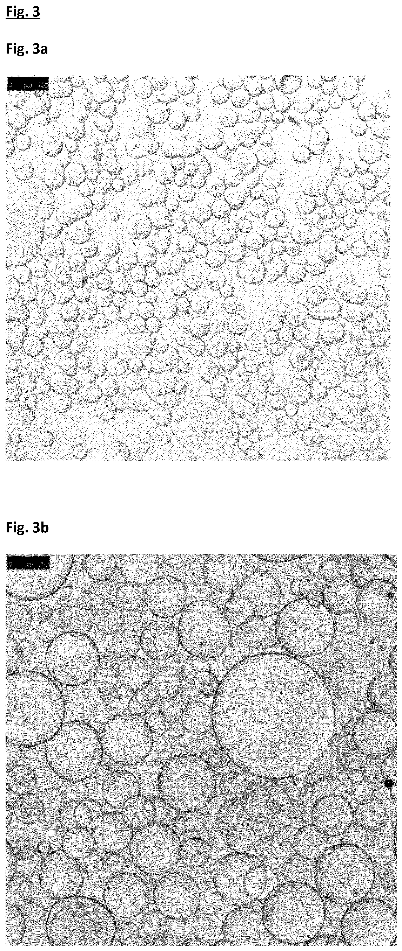

**Fig. 3** represents micrographs of confectionery water-in-oil emulsions according to the invention stabilized by whey proteins (Example 3). **Fig 3a** reports the micrograph of an emulsion prepared using 0.36%w/w WPI (Whey Protein Isolate). **Fig 3b** reports the micrograph of an emulsion prepared using 1%w/w WPI.

In the micrographs scale bar is 250µm.

### Detailed description of the invention

Unless otherwise specified % in the present description correspond to wt%.

The present invention concerns the use of milk proteins as the natural emulsifier system for the stabilization of a water-in-oil emulsion. By "emulsifing system" or "emulsifier system" is to be understood at least one ingredient with tensoactive properties.

In the present description, the term "milk protein(s)" identifies one or more proteins derived from milk, which are whey proteins (for example the globular proteins alpha-lactabumin and beta-lactoglobulin) and/or caseins or caseinates (such as for example micelle calcium or sodium caseinates) or mixtures thereof.

In the present description, the term "heat-denaturated milk protein" identifies a protein as above defined which is at least partially denaturated as a result of an heating treatment, which may occur during the process of the invention, namely during step b) as above defined, or upfront the process of the invention, according to methods well known to the skilled person.

In the present description, the term "milk protein ingredient(s)" identifies ingredients which are mainly constituted by or based on milk proteins and/or heat-denaturated milk proteins as above defined such as, for example, whey concentrate or isolate, whey powder, sodium caseinate, etc.

In one embodiment, the "milk protein ingredient(s)" is essentially constituted by milk protein(s).

In one embodiment, when the milk protein ingredient is based on whey proteins, such proteins are at least partially denaturated.

In an additional embodiment, the whey proteins are at least partially denaturated as a result of a heating step in the preparation of the water-in-oil emulsions according to the invention [for example in Step b) as above defined].

Without wishing to be bound by theory, it is believed that as a result of the optional heating Step b) above described the at least partially denaturated milk protein may start to aggregate while the water-in-oil emulsion is forming providing a robust network which strongly stabilizes the emulsions.

In another additional embodiment, the whey proteins are at least partially denaturated before the process of the invention [before step a)].

In the present description, what is meant by "natural ingredients" is ingredients of natural origin. These include ingredients which come directly from the field etc. They may also include ingredients which are the result of a physical or microbiological/enzymatic process (e.g. extraction, fermentation etc.).

In the present invention, the term "confectionery product" is to be understood as meaning a chocolate product, a chocolate-like product comprising cocoa butter replacers, cocoa-butter equivalents or substitutes, a coating chocolate, a chocolate-like coating product comprising cocoa butter replacers, cocoa-butter equivalents or substitutes, a coating chocolate for ice-creams, or a chocolate-like coating for ice-cream comprising cocoa butter replacers, cocoa-butter equivalents or substitutes,.

The product may be in form of an aerated product, a bar, or a filling, among others. It may also be inclusions, chocolate layers, chocolate nuggets, chocolate pieces, chocolate drops, or shaped chocolates, such as in the form of letters of the alphabet and numbers, dinosaurs, cars, and the like. The confectionery product of the invention may further contain crispy inclusions e.g. cereals, like expanded or toasted rice or dried fruit pieces which are preferably coated in moisture barriers to delay the absorption of moisture from the confectionery product.

As it will be apparent throughout the description, the confectionery products (not part of the invention) will consist of or comprise confectionery water-in-oil emulsions used according to the invention.

In the present invention, the term "fat based confectionery mass" is to be understood to identify a fat based mass which is intermediate (for example in a melted state) for the preparation of confectionery products as above defined.

In the present description, "food-ingredients" refers to ingredients of natural origin containing nutrients that are consumed to provide nutritional support for the body.

In the present specification, the term "fat phase" is understood as including any solid and/or liquid ingredient miscible with oil or fat or that has the capacity to dissolve in oil or fat, and "aqueous phase" as including any solid and/or liquid ingredient miscible with water or that has the capacity to dissolve in water.

In the present specification, the term "confectionery emulsion" is to be understood as an emulsion comprising an amount of at least one sugar or hydrophilic sweetener which will be typically dissolved in the aqueous phase of the emulsion.

In the present specification, the term "confectionery water-in-oil emulsion" is to be understood as a confectionery emulsion as above defined wherein the aqueous phase is dispersed in a continuous fat phase.

In the confectionery product or confectionery water-in-oil emulsion of the present invention, the fat phase is typically cocoa butter, a cocoa butter substitute, cocoa butter replacer, cocoa butter improver and/or cocoa butter equivalent, among others.

In one embodiment, when the confectionery product according to the invention is a chocolate or chocolate like product, the fat content will range between 20 and 50% w/w in the confectionery product, preferably between 25 and 45%w/w.

In another embodiment, when the confectionery product according to the invention is an ice-cream chocolate coating or/and ice-cream chocolate like coating product, the fat phase will range within 35 and 75% w/w in the confectionery product, preferably between 40 and 70% w/w .

Cocoa butter substitute is a lauric fat obtained from the kernel of the fruit of palm trees obtained by fractionation and/or hydrogenation of palm kernel oil. It comprises about 55% lauric acid, 20% myristic acid and 7% oleic acid, cocoa butter substitutes cannot be mixed with cocoa butter. Cocoa butter equivalents are vegetable fats with similar chemical and physical characteristics to cocoa butter, which are obtained by blending different fractions of other fats or by intersterification, and can be used interchangeably with cocoa butter in any recipe. Cocoa butter replacers are formed by non lauric vegetable fats which may be mixed with cocoa butter but only in limited proportions: they have similar physical, but not chemical characteristics to cocoa butter. Cocoa butter replacers can be used in recipes partially based on cocoa mass or cocoa butter. Cocoa butter improvers are harder cocoa butter equivalents which are not only equivalent in their compatibility but also improve the hardness of some of the softer qualities of cocoa butter.

The inventors of the present invention have surprisingly found that milk protein ingredients are able to produce confectionery water-in-oil emulsions with good stability without the need for the addition of emulsifiers.

Unlike particles of the majority of stabilising systems described in the literature, the milk protein ingredients according to the invention are obtained from food source of naturally occurring materials. As milk protein ingredients are not classed as food additives, the invention provides the important advantage of allowing the preparation of products that are free of additives, e.g. free of the so-called "E-numbers" associated with chemical emulsifiers.

Surprisingly milk protein ingredients have been found to effectively stabilise confectionery water-in-oil emulsions without the need for any synthetic or artificial emulsifier.

Suitably, the diameter of aqueous bubbles in the water-in-oil emulsion of the invention can range between 10 and 1500 µm as measured by microscopy, preferably between 20 and 600 µm.

In one embodiment, the mean particle diameter for bubbles of the aqueous phase is lower than 200 µm, preferably lower than 100 µm, more preferably lower than 50 µm.

When the mean particle diameter for bubbles of the aqueous phase is lower than 50 µm, the resulting confectionery water-in-oil emulsion results particularly stable.

Without wishing to be bound by any theory it is believed that the emulsifying capacity of the milk proteins, results from the adsorption of milk protein particles to the oil/water interface. It is surprising that the milk protein ingredients have been found to exhibit the observed sufficiently good emulsion stabilisation effects without requiring the addition of any other emulsifier, and that the deriving confectionery water-in-oil emulsion can be used without any technical challenge in the preparation process of a confectionery product, such as viscosity increase due the absorption effect of sugar on water.

Conventional emulsifiers include for instance sugar esters, polyglycerol fatty acid esters, polyglycerol polyricinoleate (PGPR), polysorbates (polyoxyethylene sorbitan esters), monoglycerides/diglycerides and their derivatives, sodium stearoyl lactylate (SSL), phospholipids, glycerol monooeleate, amongst others. Advantageously, the present invention uses milk protein ingredients to stabilize confectionery water-in-oil emulsions without the need of addition of such emulsifiers.

The present invention enables the preparation of the above-described confectionery products, based on emulsions that are free of artificial or synthetic emulsifiers. Advantageously the present invention enables the preparation of products that are free of monoglycerides, diglycerides and their derivatives. Advantageously the present invention enables the preparation of products, in particular confectionery products, based on emulsions that are free of glycerol monooleate, polyglycerol esters and polyglycerol esters of polyrincinoleic acid.

Surprisingly the inventors of the present invention have found that milk protein ingredients are able to produce confectionery water-in-oil emulsions with exceptional stability, without the need for emulsifiers and which can be advantageously used in the preparation of confectionery products without incurring in the traditional challenges of water incorporation into fat based masses comprising sugar.

Unlike the principal stabilising ingredients described in the literature, milk protein ingredients are obtained from a food source of naturally occurring materials. As milk protein ingredients are not classed as food additives, the invention provides the important advantage of allowing the preparation of products that are free of additives, e.g. free of the so-called "E-numbers".

The milk protein ingredients may be obtained from different sources of milk solids, such as skimmed milk powder, whey protein concentrate, whey protein isolate, whey powder, caseinates, or other more pure whey protein forms, such as β-lactoglobulin preparations.

Advantageously milk proteins can be used to replace conventional emulsifiers to effectively stabilise water-in-oil emulsions in confectionery products.

According to one aspect of the specification there is provided a confectionery product (not part of the invention) consisting of or comprising a stable confectionery water-in-oil emulsion comprising milk protein ingredients as the emulsifying agent, in the absence of any synthetic or artificial emulsifiers. The amount of milk proteins or heat-denaturated proteins included as the emulsifier will depend on the desired properties of the emulsion product amongst other.

The milk proteins are present in amount of from about 0.01 to about 5% wt/wt of the confectionery product, preferably from about 0.05 to about 5% wt/wt.

The confectionery product (not part of the invention) comprises sugars or hydrophilic sweeteners. These sugars or hydrophilic sweeteners include sucrose, fructose, sugar replacers such as polyols (e.g., maltitol, lactitol, isomalt, erythritol, sorbitol, mannitol, xylitol) or bulking agents like polydextrose or other sweeteners like tagatose or high intensity sweeteners like saccharin, aspartame, acesulfame-K, cyclamate, neohesperidin, thaumathin, sucralose, alitame, neotame or any combination thereof.

The confectionery product may comprise ingredients such as flavouring agents, colorants, or ingredients derived from milk. Typically flavouring agents are used to add flavours such as vanilla, raspberry, orange, mint, citrus, strawberry, apricot, lavender flavours, etc, and any other fruit, nutty or flower flavouring agent, among others. ingredients derived from milk can be liquid milk or milk powder, either full fat, partially defatted or defatted, and delactosylated or not.

Advantageously the present invention allows the preparation of confectionery products based on water-in -oil emulsions having very good stability properties, even in the absence of any added emulsifiers. Advantageously the present invention allows the preparation of emulsion-based confectionery products having very good emulsion stability properties, stabilized by milk protein ingredients as the emulsifying agent, without the addition of any other emulsifier.

The emulsions stabilised with milk proteins are prepared according to the method here below described.

In another aspect provided is a process for preparing a water-in oil emulsion for use in the present invention, comprising the steps of:
a) mixing a fat phase and a natural emulsifier system comprising milk protein ingredient;
b) optionally heating the mixture of step a) at a temperature comprised between 70 and 110 deg C for a time comprised between 10 seconds and 30 minutes
c) Adding a water phase comprising sugar to the fat phase obtained in step a) under mixing to form a water-in-oil emulsion.

In certain embodiments, for the preparation of a water-in-oil emulsion, the milk proteins are dispersed in the oil/fat phase, and the aqueous phase is added to the oil/fat phase, before agitation to form an emulsion.

Advantageously the present invention makes possible the preparation of confectionery products based on emulsions, which do not contain any additives, or non-natural ingredients.

Additionally and advantageously, the milk protein stabilised emulsions for use in the present invention and their method of preparation allows the preparation of food products based on water-in-oil emulsion systems, particularly confectionery products, without incurring in the typical manufacturing challenges of water incorporation into fat based masses comprising sugar, such as, for example, viscosity increase during processing.

The term "about," as used herein, should generally be understood to refer to both numbers in a range of numerals. Moreover, all numerical ranges herein should be understood to include each whole integer within the range.

The invention will now be described in further details in the following non-limiting examples.

### EXAMPLES

### Example 1: Preparation of white chocolate confectionery product based on confectionery water-in oil-emulsion

### Step 1- Formation of Whey protein isolate (WPI)-Cocoa Butter (CB) emulsion

A water-in-oil emulsion based on cocoa butter and comprising whey protein isolate was prepared according to the following recipe:

| **Ingredients** | **% (w/w)** |
|---|---|
| WPI pre-mix (Cocoa Butter and WPI) | 6.96 (6.6 Cocoa Butter and 0.36 WPI) |
| Cocoa Butter | 33.04 |
| Sugar | 43.14 |
| Water | 16.86 |
| **Total** | **100** |
| Aqueous Phase (%) | 60 |
| Oil Phase | 40 |

And as below described:

### Whey protein isolate (WPI) pre-mix preparation:

- Mix cocoa butter and WPI and heat up to 90 °C for approximately 2 minutes.

### Fat phase preparation:

- Melt cocoa butter at 50 °C
- Keep at 50 °C

### Water phase preparation:

- Weigh water and heat to 60 °C
- Add sugar and mix continuously until dissolved.
- Keep at 50 °C

### W/O emulsion preparation:

- Keep fat phase at 50 °C
- Add slowly the WPI premix while mixing at medium speed using a Silverson mixer until the mixture is homogeneous.
- Slowly add the water phase under medium shear mixing using a Silverson mixer.

### Step 2- Mixing of emulsion obtained in step 1) with white chocolate

The water-in-oil emulsion obtained from step 1) was mixed under low shear with a white chocolate mass having the following recipe:
White chocolate mass % (w/w)
Sugar 43.3
Cocoa butter 24.0
Whole milk powder 27.1
Whey powder 4.9
Lecithin 0.6
Vanillin 0.1
Total 100

And which was obtained following standard chocolate manufacture procedures of Following standard procedures: mixing, refining, conching.

The ratio between the water-in-oil emulsion and white chocolate mass was as follows:

| **Mixing** | **%(w/w)** |
|---|---|
| White Chocolate Mass | 40 |
| WPI/CB Emulsion | 60 |
| **Total** | **100** |

Step 3- Tempering of white chocolate confectionery product based on water-in oil-emulsion moulding and demoulding of chocolate bars was performed according to traditional techniques known in the state of the art.

As it can be observed from pictures reported in Fig. 1a, 1b and 2, the confectionery mass could be moulded and de-moulded without difficulties as no viscosity increase of the mass was observed.

The white chocolate confectionery product based on water-in oil-emulsion which was characterized by the following composition:

| | |
|---|---|
| Calculated total fat | 34.88 |
| Calculated total water | 10.1 |
| Calculated total sugar | 43.18 |

### Example 2: Preparation of milk chocolate confectionery product based on confectionery water-in oil-emulsion

### Step 1- Formation of Whey protein isolate (WPI)-Cocoa Butter (CB) emulsion

A water-in-oil emulsion based on cocoa butter and comprising whey protein isolate was prepared according to the following recipe:

| **Ingredients** | **% (w/w)** |
|---|---|
| WPI pre-mix (Cocoa Butter and WPI) | 6.96 (6.6 Cocoa Butter and 0.36 WPI) |
| Cocoa Butter | 33.04 |
| Sugar | 43.14 |
| Water | 16.86 |
| **Total** | **100** |
| Aqueous Phase (%) | 60 |
| Oil Phase | 40 |

And as below described:

### Whey protein isolate (WPI) pre-mix preparation:

- Mix cocoa butter and WPI and heat up to 90 °C for ap proximately 2 minutes.

### Fat phase preparation:

- Melt cocoa butter at 50 °C
- Keep at 50 °C

### Water phase preparation:

- Weigh water and heat to 60 °C
- Add sugar and mix continuously until dissolved.
- Keep at 50 °C

### W/O emulsion preparation:

- Keep fat phase at 50 °C
- Add slowly the WPI premix while mixing at medium speed (1200 rpm) using a Silverson mixer until he mixture is homogeneous.
- Slowly add the water phase under medium shear mixing using a Silverson mixer.

### Step 2- Mixing of emulsion obtained in step 1) with milk chocolate

The water-in-oil emulsion obtained from step 1) was mixed under low shear with a milk chocolate mass having the following recipe:
Milk chocolate mass % (w/w)
Sugar 41.6
Cocoa Liquor 10.6
Cocoa butter 24.5
Whole milk powder 22.6
Whey powder 4.9
Lecithin 0.4
Vanillin 0.3
Total 100

And which was obtained following standard chocolate manufacture procedures of Following standard procedures: mixing, refining, conching.

The ratio between the water-in-oil emulsion and milk chocolate mass was as follows:

| **Mixing** | **%(w/w)** |
|---|---|
| Milk Chocolate Mass | 50 |
| WPI/CB Emulsion | 50 |
| **Total** | **100** |

Step 3- Tempering of milk chocolate confectionery product based on water-in oil-emulsion moulding and de-moulding of chocolate bars was performed according to traditional techniques known in the state of the art.

The milk chocolate confectionery product based on water-in oil-emulsion which was characterized by the following composition:

| **Milk Chocolate** | **%(w/w)** |
|---|---|
| Calculated Total Fat | 35.48% |
| Calculated Total Water | 8.4% |
| Calculated Total Sugar | 42.37% |

### Example 3: Micrography for confectionery water-in-oil emulsions according to the invention

Two confectionery water-in-oil emulsion stabilized by whey proteins according to the invention were prepared with an analogous recipes and procedures to those described in Examples 1 and 2 hereabove.

Micrographs were generated for such water-in-oil emulsion. The micrographs were obtained using transmitted light in a confocal laser scanning microscope (Leica SP8 DM6000, Leica Microsystems, Heilderberg, Germany). A drop of the emulsion was placed on a microscope slide and examined using a 5X dry objective. Images of 1024x1024 pixels were recorded.

**Fig. 3** reports micrographs of such confectionery water-in-oil emulsions. **Fig 3a** reports the micrograph of an emulsion prepared using 0.36%w/w WPI (Whey Protein Isolate) as emulsifying system. **Fig 3b** reports the micrograph of an emulsion prepared using 1% w/w WPI as the emulsifying system. In the micrographs scale bar is 250µm.

From the micrographs it can be clearly observed that a stable emulsion is formed in both samples, the obtained average dimension of the dispersed phase being different when different amounts of emulsifying agent are used (Fig. 3a and Fig. 3b). The micrographs were also analysed with an image analysis software (Image J software) in order to determine the average mean diameter for water droplets dispersed in the fat phase. The results show that:
For micrograph of the water-in-oil emulsion stabilised by the use of 0.36% WPI the average mean diameter is 44.73 µm.

For micrograph of the water-in-oil emulsion stabilised by the use of 1.0% WPI the average mean diameter is 161.86 µm.

### Example 4: Electrical Conductivity measurement of a confectionery water-in-oil emulsion according to the invention

Two confectionery water-in-oil emulsion stabilized by whey proteins according to the invention were prepared with an analogous recipes and procedures to those described in Examples 1 and 2 hereabove (containing 0.36%w/W and 1.0% w/W WPI as emulsifying system respectively).

Electrical Conductivity of such emulsions was measured in order to demonstrate that emulsion formed was indeed a water-in-oil emulsion.

Electrical conductivity was measured for such water-in-oil emulsion using a Hanna Instruments HI-8733N Conductivity Meter.

Emulsions where the fat is the continuous phase (water-in-oil) should give 0 values for conductivity, since a continuous fat phase has much higher resistance to electrical conductivity than an aqueous phase. The conductivity is in fact a measure of how well a solution conducts electricity. The conductivity of water comes from the amount of dissolved ions in the water. When water is not trapped within the emulsion droplets, it will give a positive measurement of conductivity.

The Electrical conductivity measured for the two confectionery emulsion according to the invention prepared as above described gave a 0 µS/cm value at 45 °C of temperature, thus confirming the nature of a water-in-oil emulsion for the sample.

## Claims

1. Use of milk proteins as the emulsifying system in a confectionery product comprising a confectionery water-in-oil emulsion, wherein milk proteins as the emulsifying system are present at from 0.01 to 5% wt/wt, wherein the confectionery product is chocolate, chocolate-like product, chocolate- or chocolate-like ice-cream coating product; and the milk protein is whey protein concentrate, whey protein isolate, whey powder, caseins, caseinates, alpha-lactabumin or beta-lactoglobulin, wherein the confectionery water-in-oil emulsion does not contain any additional emulsifier and the chocolate-like products comprise cocoa butter replacers, cocoa-butter equivalents or substitutes.

## Patentansprüche

1. Verwendung von Milchproteinen als Emulgiersystem in einem Süßwarenprodukt, umfassend eine Wasser-in-ÖI-Emulsion für Süßwaren, wobei Milchproteine als Emulgiersystem in einer Menge von 0,01 bis 5 Gew.-% vorliegen, wobei das Süßwarenprodukt Schokolade, schokoladenähnliches Produkt, Schokoladen- oder schokoladenähnliches Eiscreme-Beschichtungsprodukt ist; und wobei das Milchprotein Molkeproteinkonzentrat, Molkeproteinisolat, Molkepulver, Caseine, Caseinate, alpha-Lactabumin oder beta-Lactoglobulin ist, wobei die Wasser-in-ÖI-Emulsion für Süßwaren keinen zusätzlichen Emulgator enthält und die schokoladenähnlichen Produkte Kakaobutteraustauscher, Kakaobutteräquivalente oder Ersatzstoffe umfassen.

## Revendications

1. Utilisation de protéines de lait en tant que système émulsifiant dans un produit de confiserie comprenant une émulsion de confiserie eau-dans-huile, dans laquelle les protéines de lait en tant que système émulsifiant sont présentes à raison de 0,01 à 5 % en poids/poids, le produit de confiserie étant du chocolat, un produit similaire au chocolat, du chocolat ou de la crème glacée similaire au chocolat comme produit de revêtement ; et la protéine de lait est un concentré de protéine de lactosérum, un isolat de protéine lactosérique, une poudre de lactosérum, des caséines, des caséinates, de l'alpha-lactabumine ou de la bêta lactoglobuline, dans laquelle l'émulsion de confiserie eau-dans-huile ne contient pas d'émulsifiants supplémentaires et les produits similaires au chocolat comprennent des remplaçants de beurre de cacao, ou des équivalents ou des substituts de beurre de cacao.
